# FASCICULE DE BREVET EUROPEEN

(11) **EP 3 189 876 B1**
(45) Date de publication et mention de la délivrance du brevet: **28.10.2020**
(21) Numéro de dépôt: 17150615.7
(22) Date de dépôt: 09.01.2017
(51) Int. Cl.: A62D 3/02, B09B 3/00, C05F 17/00, C12P 5/02, A62D 101/04

(54) **PROCEDE DE TRAITEMENT DE DECONTAMINATION DE MATIERES ORGANIQUES CONTENANT DES MOLECULES ACTIVES**
BEHANDLUNGSVERFAHREN VON ORGANISCHEN MATERIALIEN, DIE AKTIVE MOLEKÜLE ENTHALTEN
METHOD FOR PROCESSING ORGANIC MATERIALS CONTAINING ACTIVE MOLECULES

(30) Priorité: 08.01.2016 FR 1650155
(43) Date de publication de la demande: 12.07.2017
(73) Titulaire: Pioneer Genetique Sarl, 31840 Aussonne (FR); Arterris Innovation, 31500 Toulouse (FR)
(72) Inventeur: DUBOIN, Guillaume, 31290 Villefranche de Lauragais (FR)
(74) Mandataire: Regimbeau

(56) Documents cités:
- WO-A1-2013/138928
- AU-A1- 2013 336 281
- FR-A1- 2 924 038
- US-A- 5 646 157
- JAAK RYCKEBOER ET AL: "The Fate of Plant Pathogens and Seeds During Anaerobic Digestion and Aerobic Composting of Source Separated Household Wastes", COMPOST SCIENCE AND UTILIZATION, vol. 10, no. 3, 1 juin 2002 (2002-06-01), pages 204-216, XP055297696, US ISSN: 1065-657X, DOI: 10.1080/1065657X.2002.10702082
- Helene Carrere ET AL: "Different pathways of resource recovery from anaerobic digestion of organic residues", , 30 avril 2016 (2016-04-30), XP055298041, Extrait de l'Internet: URL:http://www.iupac-rome2016.it/wp-conten t/uploads/2016/05/CARRERE-Inra.pdf [extrait le 2016-08-26]

## Description

La présente invention concerne le domaine de la dépollution de matières organiques contenant au moins une molécule active susceptible d'impacter l'environnement.

De manière générale, avec l'augmentation de la population, l'élimination des déchets organiques est devenue une préoccupation majeure des pouvoirs publics. Il est bien connu, en effet, que si les déchets organiques ne sont pas éliminés de manière raisonnée, leur simple mise en décharge peut engendrer une pollution importante des eaux de surfaces, des nappes phréatiques et favoriser les agents infectieux. La production de déchets augmente parallèlement à l'évolution du niveau de vie. Les conséquences de cette évolution sont : - une augmentation des coûts de traitement et d'élimination des déchets de façon à préserver l'environnement; - une prise de conscience de la limitation des ressources en matières premières et en énergie disponibles pour assurer les traitements. Les politiques de tri des déchets à la source ont été préconisées dans le but d'extraire des déchets un maximum de fractions valorisables afin de réduire les mises en décharge problématiques ou les incinérations indésirables. Cependant, en matière de traitement des déchets organiques, le tri est difficile tant les sources et la forme des déchets sont multiples : eaux usées, déchets ménagers, déchets de l'industrie agro-alimentaire, déchets verts provenant de l'entretien des espaces verts, eaux de ruissellement, etc.

Le cas particulier des déchets organiques contenant des molécules actives telles que des molécules pharmaceutiques vétérinaires ou humaines, des hormones ou perturbateurs endocriniens, des molécules phytopharmaceutiques de type fongicides, insecticides, herbicides pose un problème tout particulier du fait des risques immédiats ou différés que ces molécules peuvent avoir sur l'ensemble de la chaîne de consommation, sur l'environnement ainsi qu'en matière de santé publique.

Dans le domaine des semences, la problématique est aussi toute particulière. En effet, chaque année, plusieurs tonnes de semences traitées à l'aide de produits phytosanitaires sont déclassées et doivent être éliminées. Ainsi La filière semences détruit chaque année près de 16 000 tonnes de semences traitées déclassées (enquête UFS, 2013). A l'heure actuelle, la cimenterie est le moyen de destruction des semences traitées déclassées le plus couramment utilisé et le plus sûr.

Ces semences traitées détruites via la filière de la cimenterie est remarquablement efficace car elle permet la destruction de la totalité des semences et des matières actives qui les enrobent tout en produisant de l'énergie thermique renouvelable. En revanche, elle présente une efficience très limitée car le prix de traitement est en moyenne de 80 €/t départ, soit un coût compris entre 350 k€ et 500 k€ par an. En outre, elle génère du CO2 en grande quantité.

Les produits particuliers à recycler que constituent les semences traitées représentent en effet un challenge tant sur le plan technologique qu'environnemental. En effet, par rapport à des déchets dit « classiques » de l'industrie agro-alimentaire, la quantité et la qualité des substances actives, potentiellement dangereuses à courte ou moyenne échéance tant pour l'homme que l'environnement posent un problème quant à leur élimination.

Diverses voies de traitement et valorisation de déchets organiques, en particulier ceux comprenant des substances chimiques actives ont été envisagées et diverses possibilités d'élimination des semences traitées existent. Le choix entre les différentes options dépend du matériau à éliminer mais aussi des réglementations nationales et locales en vigueur.

Comme évoqué précédemment, la voie principale est aujourd'hui l'incinération avec comme avantage le fait que les sociétés spécialisées travaillent dans le traitement de déchets dangereux et disposent donc en principe de procédés adéquats pour la prise en charge de semences traitées et possèdent généralement les permis nécessaires pour tout ce qui touche à l'environnement.

Les inconvénients de cette filière sont des prix élevés car le prix est calculé sur le poids de semences et non sur le poids de matière active.

Une autre option consiste en un traitement des déchets par ensevelissement dans des terrains sanitaires par des sociétés spécialisées détenant les autorisations adéquates. Le problème réside aussi dans les coûts pour le semencier d'un tel traitement.

Une autre option consiste en la production d'alcool utilisé ensuite comme carburant. C'est en effet une pratique constatée au Brésil.

Cette solution présente l'avantage de tout traiter en circuit fermé puisque les résidus produits lors de la fabrication de l'alcool sont incinérés pour créer de l'énergie exploitée lors du processus de fabrication.

Les problèmes résident dans les coûts de transport qui peuvent varier énormément en fonction de l'éloignement de l'usine de fabrication d'alcool. En outre, ce type de structure n'opère pas habituellement dans le domaine des traitements des déchets et ne possède donc pas forcément les permis et les procédures de contrôle nécessaires.

Il est enfin possible de transformer les produits en compost et permettre ainsi aux systèmes biologiques de dégrader les produits de protection des plantes en substances inoffensives. Les problèmes inhérents à cette voie résident dans le fait que la dégradation des substances de traitement des semences peut connaître de grandes variations dans la durée et les conditions d'un produit à l'autre et n'est jamais complète compte tenu des caractéristiques physico-chimiques très différentes d'un produit à l'autre.

FR2924038 décrit un procédé traitement des déchets organiques, comprenant une première étape de traitement de déchets par méthanisation, et une seconde étape de traitement en phase aérobie thermophile ou mésophile, ladite étape de traitement par méthanisation permettant de produire du gaz dont l'énergie est employée pour produire le chauffage nécessaire au traitement des déchets en phase aérobie mésophile ou thermophile, ainsi que le dispositif permettant sa mise en œuvre. Il est certes indiqué dans ce document que dans les conditions de température élevée, la plupart des substances actives pouvant poser problème dans le recyclage des déchets organiques, telles que les médicaments -dont les antibiotiques-, les hormones de synthèse, les pesticides, les détergents, les toxines, sont digérées ou détruites. Cependant les doses de pesticides ou autres molécules actives dans les déchets traités par le procédé de FR2924038 sont beaucoup plus faibles que dans le cas de semences traitées puisque les substrats utilisés sont des résidus de l'industrie alimentaire, nécessairement moins « chargés » en substances actives que des semences traitées. En particulier, FR2924038 est silencieux quant au traitement de semences enrobées de molécules actives.

WO200532262 décrit un procédé de traitement en continu, semi-continu ou discontinu d'un substrat, dans lequel ledit substrat installé dans un récipient bioréacteur est soumis à l'action d'une culture de cellules vivantes permettant d'effectuer une réaction sur ledit substrat et dans lequel on inocule périodiquement le milieu à l'aide de cellules vivantes secondes améliorant ladite réaction, lesdites cellules vivantes secondes étant issues d'une sélection effectuée par un dispositif de sélection automatique, d'une population de cellules vivantes dynamiques et ledit dispositif de sélection automatique de cellules vivantes étant alimenté par le même substrat que le récipient bioréacteur et étant inoculé à l'origine par les cellules vivantes premières présentes dans la cuve du récipient bioréacteur. Ce procédé est complexe à mettre à œuvre et à contrôler.

WO2010003255 décrit un procédé visant l'utilisation des effluents et déchets d'une serre de culture pour réaliser une digestion anaérobie produisant du biogaz et dégradant les pesticides. Cependant, le procédé inclut une phase de prétraitement des déchets solides avant digestion anaérobie et ne concerne ni n'évoque des semences ou autres produits solides enrobés de pesticide.

Ainsi bien que diverses techniques existent pour traiter des déchets par la technologie de la méthanisation associée ou non au compostage via lesquelles des matières toxiques telles que des pesticides peuvent être digérées ou détruites, aucun document ne semble s'intéresser à la destruction de molécules chimiques actives présentent sur ou au sein d'un substrat dans des quantités telles que celle présentes dans des semences traitées.

Il ressort ainsi qu'il existe un besoin en filière de traitement et destruction par valorisation des semences traitées qui corresponde aux besoins d'adaptation aux aléas de production du site, soit compétitive, dégage une image positive et valorisable ; assure une traçabilité garantie, réponde au cadre réglementaire et permette surtout de traiter et d'éliminer les substances chimiques actives quelques soit leur nature et chimiques et propriétés physico-chimiques.

C'est ainsi que l'objet de la présente invention concerne un procédé de traitement de décontamination d'un produit organique contenant au moins une molécule active choisie dans le groupe constitué par les molécules hydrosolubles et au moins une molécule active choisie dans le groupe constitué par les molécules non hydrosolubles, comprenant les étapes suivantes :
- i) fourniture d'un mélange comprenant ledit produit organique,
- ii) traitement du mélange par méthanisation pendant 10 à 80 jours à une température comprise en 30 et 60°C,
- iii) récupération d'un digestat composé d'eau, de matières minérales, de matières organiques et d'au moins une molécule active non hydrosoluble,

- iv) séparation liquide/solide du digestat,
- v) traitement par compostage de la phase solide obtenue par séparation liquide/solide du digestat jusqu'à l'obtention d'un substrat dans lequel la quantité de molécules actives non-hydrosolubles est diminuée d'au moins 70% par rapport à la quantité initialement présente dans ladite phase solide,
- vi) récupération du substrat sous la forme de compost.

La méthanisation est effectuée à une température comprise entre 30 et 60°C et peut être une méthanisation mésophile ou une méthanisation thermophile.

La méthanisation mésophile correspond à une température comprise entre environ 30 et 45°C, particulièrement entre environ 35 et 40°C environ. Dans le cas de méthanisation mésophile environ 20 % de la chaleur est autoconsommée. Ce mode de méthanisation est plus stable donc plus facile à maîtriser.

La méthanisation thermophile correspond à une température comprise entre environ 40 et 60°C, plus particulièrement entre 45 et 55°C. Les temps de séjour sont en général plus courts qu'en méthanisation mésophile.

Le temps de traitement par méthanisation pourra ainsi être compris entre 10 et 80 jours, plus particulièrement entre 20 et 60 jours. Cependant cette durée pourra être dépendante de la température et ainsi pour une méthanisation mésophile la durée sera plus longue et comprise entre 40 et 80 jours par exemple. Si la méthanisation est thermophile, la durée pourra être réduite et pourra être comprise entre 10 et 40 jours par exemple.

Dans le procédé selon la présente invention le produit organique est choisi parmi les semences traitées.

Les semences traitées mise en œuvre peuvent se présenter sous la forme entière ou avantageusement sous la forme broyée ce qui accélère l'étape de méthanisation.

Dans un troisième mode de réalisation, le procédé selon la présente invention est caractérisé en ce que la molécule active hydrosoluble et la molécule active non hydrosoluble sont choisies parmi les molécules fongicides, les molécules insecticides, les molécules herbicides, les médicaments humains, les médicaments vétérinaires, les hormones et leurs mélanges.

Dans un quatrième mode de réalisation, le procédé selon la présente invention est caractérisé en ce que la molécule active hydrosoluble est choisie dans le groupe constitué par la clothianidine, l'imidaclopride, le méfénoxam, le mercaptodiméthur, le thiamethoxam, le thirame, le triazoxide, le cymoxanil, la téfluthrine, la silthiofam, le prothioconazole ainsi que leurs mélanges.

Dans un autre mode de réalisation, le procédé selon la présente invention est caractérisé en ce que la molécule active non hydrosoluble est choisie dans le groupe constitué par le fipronil, le fludioxonil, le thébuconazole, le triticonazole ainsi que leurs mélanges.

Dans le cadre de la présente invention, on entend par « non hydrosoluble » la capacité d'une molécule à faire partie des matières en suspension dans l'eau ou le milieu aqueux lors de l'étape de méthanisation et lors de la séparation des phases. Cette capacité à rester en suspension est due soit à sa faible solubilité intrinsèque et/ou à sa forte affinité pour les particules présentent dans l'eau et auxquelles elle s'adsorbe, c'est-à-dire la matière en suspension (MES). Cette MES désigne l'ensemble des matières solides insolubles visibles à l'œil nu présentes dans un liquide. Plus une eau en contient, plus elle est dite turbide. Cette MES constitue une matrice capable d'adsorber divers polluants, d'où l'importance du traitement de compostage post méthanisation afin de permettre la destruction des molécules actives non-hydrosolubles, c'est-à-dire les matières faisant partie de la MES. Ainsi on considérera, dans le cadre de la présente invention, qu'une matière active non-hydrosoluble est une matière active que l'on retrouve dans la fraction MES d'un extrait.

Typiquement, la mesure de la MES est réalisée par un test normalisé dans lequel le milieu aqueux que l'on souhaite évalué est filtré à travers un filtre en fibre de verre de porosité 1 µm selon la norme NF EN 872.

Ainsi si la molécule active est retenue avec les MES, elle est considérée comme non-hydrosoluble.

A contrario si la molécule active passe à travers le filtre et se retrouve dans le filtrat, elle est considérée comme hydrosoluble.

Dans un cinquième mode de réalisation, le procédé selon la présente invention est caractérisé en ce que la matière sèche du produit organique représente de 1 à 100%, plus particulièrement de 5 à 90 %, en poids, de la matière sèche du mélange de l'étape i).

De manière particulière la matière sèche du produit organique représente de 10 à 80%, voire de 20 à 70%, voire plus particulièrement encore de 30 à 60%, et plus particulièrement encore entre 40 et 50%, en poids, de la matière sèche du mélange de l'étape i).

Cela revient à dire que le mélange de l'étape i) peut être constitué de tout ou partie en produit organique contenant au moins une molécule active.

Ainsi le produit organique contenant au moins une molécule active que le présent procédé permet de décontaminé pourra être mélangé avec une autre matière première ou déchet méthanisable et compostable. Cette autre matière première pourra être choisie parmi les déchets organiques tels que les eaux usées, les déchets verts, les déchets de l'industrie agro-alimentaire, etc.

Dans un sixième mode de réalisation, le procédé selon la présente invention est caractérisé en ce que le taux de charge organique de l'étape de méthanisation est compris entre 0,2 et 10 kg de Matière Organique/m3 de digesteur/jour.

La méthanisation est un processus biochimique se déroulant dans des récipients hermétiquement clos, couramment dénommés digesteurs, dans lesquels la matière organique est dégradée principalement en méthane et en dioxyde de carbone par une série de réactions provoquées par plusieurs groupes de microorganismes. Cette dégradation produit du biogaz riche en méthane (60% du biogaz) et un digestat constitué d'eau, de matières minérales et de matière organique stable. Cette matière organique stable est composée majoritairement de fibres ligno-cellulosiques et de composants réfractaires (polyphénols, etc.).

Le traitement par méthanisation est conforme à ce qui se pratique habituellement en matière de fermentation des déchets organiques en anaérobiose à l'aide de bactéries méthanogènes. Les déchets mis en œuvre peuvent faire l'objet d'une sélection rigoureuse parmi l'ensemble de déchets à traiter, suivant les critères connus de l'homme du métier, afin d'obtenir une méthanisation plus efficace. A cet égard, les déchets organiques issus tels qu'évoqués supra pourront être associés au produit organique contenant au moins une molécule active pour la mise en œuvre de l'étape de méthanisation.

Le digestat stabilisé soumis à une séparation liquide/solide donnant une fraction liquide ayant des propriétés fertilisantes (liquide riche en minéraux solubles tels que l'ammonium et le potassium) et une fraction solide destinée à l'étape de compostage.

Le taux de charge organique peut être défini par la quantité de matière sèche organique ou de matière solide volatile qui est chargée par volume de digesteur et par jour.

De manière particulière le taux de charge organique de l'étape de méthanisation pourra être compris entre 1 et 8 kg de Matière Organique/m3 de digesteur/jour, plus particulièrement entre 2 et 6 kg de Matière Organique/m3 de digesteur/jour voire plus particulièrement encore entre 3 et 5 kg de Matière Organique/m3 de digesteur/jour.

Les molécules actives montrent une très bonne biodégradabilité lors de l'étape de méthanisation avec une efficacité supérieure à 70%, voire supérieure à 80%, particulièrement supérieure à 90% sur la plupart des molécules. Les molécules actives peu ou pas méthanisées représentent un groupe de molécules solubles dans la phase liquide et elles se retrouvent donc dans la phase solide ce qui permet de les traiter par compostage après avoir appliqué une séparation de phases au digestat.

Dans un septième mode de réalisation, le procédé selon la présente invention est caractérisé en ce que l'étape de séparation solide/liquide est effectuée par une technique choisie dans le groupe constitué par la décantation et la filtration.

Cette étape vise à séparer la phase solide de la phase liquide et la technologie employée n'est pas critique en soit et pourra être choisie par l'homme du métier selon ses connaissances générales. La fraction liquide peut être recirculée afin de participer à l'étape de méthanisation ou peut être épandue.

Il a en effet été noté que lors de cette étape, la plupart des molécules actives hydrosolubles des matières organiques sont détruites. Seules restent ainsi les molécules actives non hydrosolubles qui vont être emportées dans la phase solide.

Dans un huitième mode de réalisation, le procédé selon la présente invention est caractérisé en ce que la décantation est choisie dans le groupe constitué par la décantation naturelle et la décantation mécanique telle que la centrifugation ou la décantation cyclonique par exemple.

Dans un neuvième mode de réalisation, le procédé selon la présente invention est caractérisé en ce que la filtration est choisie dans le groupe constitué par la microfiltration, la nanofiltration, l'ultrafiltration, la filtration mécanique à presse, la filtration mécanique à bande.

Dans un dixième mode de réalisation, le procédé selon la présente invention est caractérisé en ce que l'étape de séparation solide/liquide comprend l'ajout d'au moins un agent de floculation destiné à améliorer la capture dans la phase solide des molécules actives non-hydrosolubles.

Dans un onzième mode de réalisation, le procédé selon la présente invention est caractérisé en ce que l'agent de floculation est choisi dans le groupe constitué par les floculants organiques et les floculants minéraux.

Comme agent floculant minéral on peut citer par exemple les sels de fer et les sels d'aluminium ainsi que les polymères minéraux. Les principaux produits commerciaux sont le sulfate d'aluminium, le chlorure d'aluminium, l'aluminate de sodium, et les sels polymérisés tels que le polychlorure et le polychloro-sulfate d'aluminium. Le sulfate d'aluminium reste le produit le plus utilisé, mais il est peu à peu remplacé par des polymères minéraux plus performants. Les polymères d'aluminium agissent à la fois par décharge électrostatique et par pontage des colloïdes. Ce sont des polychlorosulfates basiques (PACS).

Les sels de fer commercialisés en traitement des eaux sont principalement le chlorure ferrique, le chlorosulfate ferrique et le sulfate ferreux. Ce sont des produits de commodité et contrairement aux sels d'aluminium, il n'existe pas de sels polymérisés à haut degré de basicité. Les sels ferriques, plus chargés, ont un meilleur pouvoir coagulant que les sels ferreux. Comme pour les sels d'aluminium, des espèces polycondensées apparaissent au cours du traitement, et sont fortement dépendantes du pH.

Les floculants organiques naturels sont des polymères hydrosolubles d'origine animale ou végétale. Généralement non ioniques, ils peuvent être modifiés chimiquement. Leur poids
moléculaire est plus faible que celui des polymères de synthèse. Leur intérêt réside dans leur caractère "naturel", non toxique, biodégradable. A titre d'exemple, on peut citer les amidons, les alginates et les gommes guar ou xanthane.

On peut aussi citer les coagulants et floculants organiques synthétiques sont des polyélectrolytes hydrosolubles de haut poids moléculaire et de différentes charges, obtenus par polymérisation d'un ou de plusieurs monomères. On peut ainsi citer les floculants, de très haut poids moléculaire (106 à 107) et charge ionique très variable dont les principaux sont les polyacrylamides.

Une des caractéristiques principales de ces agents de floculation est leur biodégradabilité car ils se retrouvent le compost qui est destiné à l'épandage dans les champs.

Il a en effet été remarqué que selon la nature hydrosoluble ou non hydrosoluble des molécules active du contenu dans le produit organique et selon la quantité de celles-ci, il peut être opportun de forcer l'entrainement des molécules non-hydrosolubles dans la fraction solide qui sera soumise à l'étape de compostage.

L'étape de séparation liquide/solide sert à limiter au maximum la fraction de matière solide en suspension dans la fraction liquide. En effet, comme il a été remarqué que les molécules actives non hydrosolubles ne sont que peu détruites lors de l'étape de méthanisation, il convient qu'il y en ait le moins possible dans la phase liquide et que le plus soit entrainé dans la phase solide qui comprend toute les matières non solubles, en ce y compris les matières en suspension. C'est ainsi que l'emploi d'agent floculant permet de faciliter l'entrainement des matières non solubles, en suspension qui pourraient se trouver dans la fraction liquide et qui sont susceptible de véhiculer des molécules actives non hydrosolubles.

Dans un douzième mode de réalisation, le procédé selon la présente invention est caractérisé en ce que l'étape de méthanisation ii) est réalisée selon une voie choisie dans le groupe constitué par la voie sèche continue ou discontinue (taux de matière sèche des substrats traités supérieur à environ 20%, particulière supérieur à 25% en poids de la matière brute), la voie liquide (taux de matière sèche des substrats traités inférieur à environ 10% en poids de la matière brute), la voie infiniment mélangée (taux de matière sèche des substrats dilués et traités compris entre environ 10% et environ 20% en poids de la matière brute).

La méthanisation est un processus endothermique qui se déroule en enceinte fermée (appelée digesteur, fermenteur, ou réacteur) généralement calorifugée afin d'y maintenir une température constante. C'est la plupart du temps la chaleur de cogénération qui permet de chauffer le digesteur.

La méthanisation par voie sèche s'applique à des ressources ou des effluents solides (supérieur à 20 % de MS). L'exploitation d'une unité de méthanisation par voie sèche est simplifiée et les infrastructures techniques beaucoup plus simples. Le chargement des digesteurs se fait par bennes. La méthanisation par voie sèche peut être continue ou discontinue.

Dans un procédé continu le substrat qui entre dans le digesteur pousse le substrat déjà présent ce qui assure une avancée régulière de la matière tout au long du réacteur. La production de biogaz et de digestat est continue.

Dans un procédé discontinu chaque digesteur est chargé et déchargé en différé pour assurer une production de biogaz continue. Une fois la méthanisation terminée, le digestat est extrait en une seule fois.

La voie liquide concerne des procédés pour les effluents dits liquides (boues, lisiers, ...) mais ils peuvent être utilisés pour les déchets solides, lesquels nécessitent alors une dilution.

L'étape de méthanisation pourra être effectuée selon un mode continu, discontinu ou semi-continu.

Dans les procédés continus l'alimentation et la vidange du digesteur se font en permanence avec une quantité entrante équivalente à celle sortante. Ils sont bien adaptés au traitement des déchets liquides.

Dans les procédés discontinus, dits « batch » les digesteurs sont remplis puis vidés séquentiellement lorsque la production de biogaz chute ou devient nulle.

Dans les procédés semi-continus le digesteur est progressivement rempli par des charges successives convenablement réparties dans le temps. La vidange est réalisée lorsque le volume utile du digesteur est atteint et que la production de biogaz n'est plus suffisante.

Dans un treizième mode de réalisation, le procédé selon la présente invention est caractérisé en ce que l'étape de compostage comprend une étape aérobiose thermophile à une température comprise entre 55 et 85°C suivie d'une étape de maturation à une température ambiante.

L'étape de compostage correspond à une phase aérobie mésophile ou thermophile et désigne un procédé de traitement biologique de la phase solide opéré par des microorganismes mésophiles ou thermophiles dans une enceinte ou le taux d'oxygène est voisin de celui rencontré dans l'air atmosphérique, soit entre 15 et 25 %. Les microorganismes mésophiles se développent à une température comprise entre 20 et 50°C, et les microorganismes thermophiles entre 50° et 80°C. De préférence ces microorganismes sont présents dans les déchets organiques avant d'être traités et sont favorisés par l'augmentation de la température au sein des différents substrats traités, mais ils peuvent être également ajoutés sous forme de spores ou de cultures concentrées, au cours du traitement pour activer le procédé.

L'étape de compostage comprend le traitement en phase aérobie thermophile de la phase solide obtenue à l'issue de l'étape iv). Cette étape de compostage comprend une première étape au cours de laquelle la phase solide en question qui comprend les molécules active non hydrosoluble est homogénéisée pour obtenir un substrat dont le taux de matière sèche est compris entre 20 et 50 %, de préférence entre 35 et 45 %. De l'eau peut être ajoutée si nécessaire. Dans une seconde étape on porte le substrat à une température permettant le développement des microorganismes thermophiles, c'est-à-dire entre 50 et 80°C environ. En général, le chauffage du substrat est effectué dans une première cuve par convection, en chauffant les parois de la cuve par exemple. A cet égard, cette première cuve dispose, de préférence, d'une paroi creuse ou d'une double paroi à l'intérieur de laquelle circule la vapeur ou l'eau chaude.

L'étape thermophile dure typiquement entre 1 heure et 30 jours et est suivie d'une étape de maturation à température ambiante, c'est-à-dire sans apport de chaleur. Cette étape de maturation peut durer de 1 jour à 30 jours, en particulier 5 à 20 jours et ce fonction de la durée de la phase thermophile et de sa température.

Par température ambiante, dans le cadre de la présente invention, on comprend une température comprise entre 15 et 30°C environ, plus particulièrement entre 18 et 22°C.

Dans un quatorzième mode de réalisation, le procédé selon la présente invention est caractérisé en ce que la durée de l'étape de compostage est comprise entre 5 jours et 8 semaines.

A l'issue de l'étape de compostage la majorité des molécules actives résiduelles non hydrosolubles qui n'avaient pas été détruites lors de la méthanisation sont détruites. Une quatrième étape optionnelle permet de faire passer le substrat dans une plusieurs cuves où il se refroidit et par lesquelles on évapore l'eau, de sorte à obtenir un substrat final sous une forme semi-solide qui va pouvoir servir de compost pour épandage et amendement des champs.

Le compostage peut être réalisé selon tout moyen approprié, par exemple dans des conteneurs transportables dont la base est dotée de tuyaux d'aération

Le compostage peut être réalisé dans des systèmes de type tambours rotatifs permettant de mélanger, aérer et déplacer la matière. Dans le tambour, le processus de compostage démarre rapidement, et les matières très dégradables et demandeuses d'oxygène sont décomposées. Dans certains systèmes commerciaux, les matières à composter restent moins d'une journée dans le tambour. Dans ce cas de figure, le tambour sert essentiellement de dispositif permettant de mélanger les matières entre elles. De l'air est fourni à partir de l'extrémité de déchargement et est intégré aux matières alors que celles-ci sont remuées. L'air circule dans la direction opposée à celle des matières. Le compost arrivant à proximité du déchargement se refroidit grâce à l'air frais entrant. Au centre, les matériaux reçoivent de l'air réchauffé, ce qui stimule le processus; et les matières à peine introduites reçoivent l'air le plus chaud afin de débuter le processus.

Le tambour peut être ouvert ou cloisonné. Un tambour ouvert fait circuler toutes les matières sans interruption dans l'ordre dans lequel elles sont entrées. La vitesse de rotation du tambour et l'inclinaison de l'axe de rotation déterminent le temps de séjour des matières. Un tambour cloisonné peut être utilisé pour gérer le processus de compostage plus finement qu'avec un tambour ouvert. Le tambour est divisé en deux ou trois chambres par des cloisons. Chaque cloison contient une boite de transfert équipée d'une porte commandée à distance. A la fin de chaque journée, la porte de transfert à l'extrémité de déchargement du tambour est ouverte et le compartiment est ainsi vidé de son contenu.

L'étape de compostage peut aussi être réalisée en silo qui ressemble à un silo à déchargement par le bas. Chaque jour, une vis transporteuse retire les matières compostées se trouvant en bas du silo, et un mélange de matières premières est chargé à son sommet. Le système d'aération à la base du silo souffle de l'air à travers les matières à composter.

L'étape de compostage peut aussi être réalisée en andain qui consiste à placer un mélange de matières premières dans de longs tas étroits appelés andains qui sont remués ou tournés de façon régulière. L'opération de retournement mélange les composants du compost et améliore l'aération passive. De manière générale, les andains ont une hauteur qui varie de 90 cm pour les matières denses telles que le fumier, à 360 cm de haut pour les matières légères, volumineuses telles que les feuilles. Leur largeur varie de 300 à 600 cm. L'équipement utilisé pour retourner les andains est déterminé par leur taille et leur espacement. Les chargeuses/pelleteuses, dotées d'une longue portée, peuvent construire des andains hauts. Les retourneuses produisent des andains larges et bas.

Les andains sont aérés essentiellement par un mouvement passif ou naturel de l'air (convection et diffusion gazeuse). Le taux d'échange avec l'air dépend de la porosité de l'andain.

Dans un quinzième mode de réalisation, le procédé selon la présente invention est caractérisé en ce que l'étape de compostage comprend un apport d'oxygène forcé et/ou au moins deux retournements d'andains.

La durée du compostage correspond à une durée permettant d'assurer l'élimination des matières actives non hydrosolubles contenues dans la phase solide. Aussi, une fois qu'une diminution de l'ordre de 70% par rapport à la quantité de matières actives initialement présentes dans la phase solide est atteinte, le compost obtenu est susceptible d'être utilisé.

Une diminution de l'ordre de 80% par rapport à la quantité de matières actives initialement présentes dans la phase solide peut être atteinte en fin de compostage.

Une diminution de l'ordre de 90% par rapport à la quantité de matières actives initialement présentes dans la phase solide peut être obtenue en fin de compostage.

Une diminution de l'ordre de 100% par rapport à la quantité de matières actives initialement présentes dans la phase solide peut enfin être obtenue en fin de compostage.

La durée totale de l'étape de compostage pourra varier de 30 jours à 120 jours et sera fonction de la température de la phase thermophile et de sa durée.

EXEMPLE Méthanisation et compostage de semences traitées avec matières actives (m.a.).

Substrat de départ : mélange de farine semences de maïs et de tournesol non traitées auquel est ajouté un mélange des différentes matières actives phytosanitaires à des concentration variées comprises entre 100 et 10000 pg/kg et ceci afin de mimer divers aspects de la réalité des semences traitées.

Données techniques du pilote de méthanisation:
- Température : 37°C
- Temps de rétention hydraulique : 27 et 46 jours
- Taux de charge organique testés : 3,8 et 2,1kg MO /m³/j
- Part de MS apportée par les semences traitées dans la MS totale injectée : 82% MS injectée

Les paramètres principaux de contrôles du composteur sont :
- Température (°C) = minimum 60°C. Elle traduit l'activité biologique ;
- Apport d'oxygène = passif ou forcé + nombre de retournement de l'andin ;
- Temps de compostage (h) = minimum 1 heure à 70°C et peut durer plusieurs semaines ;
- Temps de maturation (j) = variable entre 1 semaine à plusieurs mois.
   - Taux de dégradation > 90% Clothianidine, imidaclopride, méfénoxam (métalaxyl), mercaptodiméthur (méthiocarbe), thiaméthoxam et thirame sont biodégradés lors de la méthanisation en condition anaérobie à 37°C.
   - Taux de dégradation très variables : Fludioxonil et Fipronil sont partiellement biodégradables lorsque l'OLR est supérieur à 2,1 kgMO/m³/j. A cause de cela, toutes les m.a. ne sont pas biodégradables par méthanisation.

### Effet de la centrifugation

La répartition des m.a. a été étudiée lorsqu'une séparation de phases est appliquée au digestat. Deux familles de molécules se distinguent :
- *Clothianidine, imidaclopride, méfénoxam (métalaxyl), mercaptodiméthur (méthiocarbe), thiaméthoxam et thirame* sont piégées majoritairement dans la fraction liquide. Nous pouvons conclure qu'elles sont hydrosolubles au sens de la présente invention;
- Fipronil, fludioxonil, sont piégées majoritairement dans la fraction solide. Nous pouvons conclure qu'elles ne sont pas hydrosolubles (adsorption sur les matières en suspension).

### Effet du compostage seul

La propriété de non hydrosolubilité des m.a. récalcitrantes au traitement anaérobie de méthanisation permet de canaliser le flux de ces molécules vers la fraction solide du digestat et de poursuivre leur traitement en compostage. Le compostage (42 jours - 60°C) montre une dégradation supérieure à 90% pour toutes les m.a. ici testées.

Effet de la méthanisation + séparation de phases + compostage Les essais ont montré que le fludioxonil et le fripronil sont dégradés par compostage à plus de 90% au bout de 22 jours.

### Conclusions

Les résultats obtenus permettent de conclure :
- Les m.a. hydrosolubles se dégradent bien par méthanisation sauf qu'on ne peut conclure clairement sur la biodégradabilité par méthanisation des m.a. non hydrosolubles telle que le fludioxonil.
- Les m.a. non hydrosolubles, telles que fludioxonil et le fipronil ne sont pas hydro-solubles et se concentrent dans la fraction solide du digestat après une séparation de phase ;
- Toutes les m.a. sont finalement dégradées après l'étape de compostage à plus de 90% d'efficacité (42 j - 60°C) et l'efficacité finale maximale de la dégradation dépend principalement du temps de séjour en compostage.

## Revendications

1. Procédé de traitement de décontamination d'un produit organique contenant au moins une molécule active choisie dans le groupe constitué par les molécules hydrosolubles et au moins une molécule active choisie dans le groupe constitué par les molécules non hydrosolubles, comprenant les étapes suivantes :
- i) fourniture d'un mélange comprenant ledit produit organique,
- ii) traitement du mélange par méthanisation pendant 10 à 80 jours à une température comprise en 30 et 60°C,
- iii) récupération d'un digestat composé d'eau, de matières minérales, de matières organiques et d'au moins une molécule active non hydrosoluble,
- iv) séparation liquide/solide du digestat,
- v) traitement par compostage de la phase solide obtenue par séparation liquide/solide du digestat jusqu'à l'obtention d'un substrat dans lequel la quantité de molécules actives non-hydrosolubles est diminuée d'au moins 70% par rapport à la quantité initialement présente dans ladite phase solide,
- vi) récupération du substrat sous la forme de compost ;
- **caractérisé en ce que** le produit organique comprend les semences traitées et quela molécule active choisie dans le groupe constitué par les molécules hydrosolubles et la molécule active choisie dans le groupe constitué par les molécules non hydrosolubles sont choisies parmi les molécules fongicides, les molécules insecticides, les molécules herbicides, les médicaments humains, les médicaments vétérinaires, les hormones et leurs mélanges.

2. Procédé selon la revendication 1, **caractérisé en ce que** la molécule active choisie dans le groupe constitué par les molécules hydrosolubles est choisie dans le groupe constitué par la clothianidine, l'imidaclopride, le méfénoxam, le mercaptodiméthur, le thiamethoxam, le thirame, le triazoxide, le cymoxanil, la téfluthrine, la silthiofam, ,le prothioconazole ainsi que leurs mélanges ; et la molécule active choisie dans le groupe constitué par les molécules non hydrosolubles est choisie dans le groupe constitué par le fipronil, le fludioxonil, le thébuconazole, le triticonazole et leurs mélanges.

3. Procédé selon l'une des revendications précédentes, **caractérisé en ce que** la matière sèche du produit organique représente de 1 à 100%, plus particulièrement de 5 à 90 %, en poids de la matière sèche du mélange de l'étape i).

4. Procédé selon l'une des revendications précédentes, **caractérisé en ce que** le taux de charge organique de l'étape de méthanisation est compris entre 0,2 et 10 kg de Matière Organique/m3 de digesteur/jour.

5. Procédé selon l'une des revendications précédentes, **caractérisé en ce que** l'étape de séparation solide/liquide est effectuée par une technique choisie dans le groupe constitué par la décantation et la filtration.

6. Procédé selon la revendication précédente, **caractérisé en ce que** la filtration est choisie dans le groupe constitué par la microfiltration, la nanofiltration, l'ultrafiltration, la filtration mécanique à presse, la filtration mécanique à bande.

7. Procédé selon l'une des revendications précédentes, **caractérisé en ce que** l'étape de séparation solide/liquide comprend l'ajout d'au moins un agent de floculation destiné à améliorer la capture dans la phase solide des molécules actives non-hydrosolubles.

8. Procédé selon la revendication 7, **caractérisé en ce que** l'agent de floculation est choisi dans le groupe constitué par floculants organiques et les floculants minéraux.

9. Procédé selon l'une des revendications précédentes, **caractérisé en ce que** l'étape de méthanisation ii) est réalisée selon une voie choisie dans le groupe constitué par la voie sèche, la voie liquide, la voie infiniment mélangée.

10. Procédé selon l'une des revendications précédentes, **caractérisé en ce que** l'étape de compostage comprend une étape aérobiose thermophile à une température comprise entre 55 et 85°C suivie d'une étape de maturation à une température ambiante.

11. Procédé selon l'une des revendications précédentes, **caractérisé en ce que** la durée de l'étape de compostage est comprise entre 5 jours et 8 semaines.

12. Procédé selon l'une des revendications précédentes, **caractérisé en ce que** l'étape de compostage comprend un apport d'oxygène forcé et/ou deux retournements d'andains.

## Patentansprüche

1. Behandlungsverfahren zur Dekontamination eines organischen Produktes, enthaltend wenigstens ein aktives Molekül ausgewählt aus der Gruppe bestehend aus wasserlöslichen Molekülen und wenigstens ein aktives Molekül ausgewählt aus der Gruppe bestehend aus nicht wasserlöslichen Molekülen, die folgenden Schritte umfassend:
- i) Bereitstellen eines das organische Produkt umfassenden Gemisches,
- ii) Behandlung des Gemisches durch Methanisierung für 10 bis 80 Tage bei einer Temperatur zwischen 30 und 60 °C,
- iii) Gewinnung eines Gärrests bestehend aus Wasser, mineralischen Materialien, organischen Materialien und mindestens einem nicht wasserlöslichen aktiven Molekül,
- iv) Flüssig-/Fest-Trennung des Gärrests,
- v) Behandlung durch Kompostierung der durch die Flüssig-/Fest-Trennung des Gärrests gewonnenen festen Phase bis zum Erhalt eines Substrats, in welchem die Menge der nicht wasserlöslichen aktiven Moleküle im Verhältnis zu der anfänglich vorhandenen Menge in der festen Phase um wenigstens 70 % reduziert wird,
- vi) Gewinnung des Substrats in Form von Kompost;
- **dadurch gekennzeichnet, dass** das organische Produkt die behandelten Samen umfasst und dass das aktive Molekül ausgewählt aus der Gruppe bestehend aus wasserlöslichen Molekülen und das aktive Molekül ausgewählt aus der Gruppe bestehend aus nicht wasserlöslichen Molekülen ausgewählt sind aus fungiziden Molekülen, insektiziden Molekülen, herbiziden Molekülen, Humanarzneimitteln, Veterinärarzneimitteln, Hormonen und Gemischen davon.

2. Verfahren nach Anspruch 1, **dadurch gekennzeichnet, dass** das aktive Molekül ausgewählt aus der Gruppe bestehend aus wasserlöslichen Molekülen ausgewählt ist aus der Gruppe bestehend aus Clothianidin, Imidacloprid, Metalaxyl, Mercaptodimethur, Thiamethoxam, Thiram, Triazoxid, Cymoxanil, Tefluthrin, Silthiofam, Prothioconazol sowie deren Gemischen; und das aktive Molekül ausgewählt aus der Gruppe bestehend aus nicht wasserlöslichen Molekülen ausgewählt ist aus der Gruppe bestehend aus Fipronil, Fludioxonil, Tebuconazol, Triticonazol und deren Gemischen.

3. Verfahren nach einem der vorhergehenden Ansprüche, **dadurch gekennzeichnet, dass** die trockene Materie des organischen Produktes 1 bis 100 %, vornehmlich 5 bis 90 % nach Gewicht der trockenen Materie aus Schritt i) ausmacht.

4. Verfahren nach einem der vorhergehenden Ansprüche, **dadurch gekennzeichnet, dass** der organische Ladungsfaktor des Methanisierungsschrittes zwischen 0,2 und 10 kg der organischen Materie/m3 des Faulbehälters/Tag liegt.

5. Verfahren nach einem der vorhergehenden Ansprüche, **dadurch gekennzeichnet, dass** der Schritt der Flüssig-/Fest-Trennung durch eine Technik ausgeführt wird ausgewählt aus der Gruppe bestehend aus Dekantierung und Filtrierung.

6. Verfahren nach dem vorhergehenden Anspruch, **dadurch gekennzeichnet, dass** die Filtrierung ausgewählt ist aus der Gruppe bestehend aus Mikrofiltrierung, Nanofiltrierung, Ultrafiltrierung, mechanischer Pressfiltrierung, mechanischer Bandfiltrierung.

7. Verfahren nach einem der vorhergehenden Ansprüche, **dadurch gekennzeichnet, dass** der Schritt der Flüssig-/Fest-Trennung das Hinzufügen von wenigstens einem Flockungsmittel umfasst, bestimmt zum Verbessern des Erfassens von nicht wasserlöslichen aktiven Molekülen in der festen Phase.

8. Verfahren nach Anspruch 7, **dadurch gekennzeichnet, dass** das Flockungsmittel ausgewählt ist aus der Gruppe bestehend aus organischen Flockungsmitteln und mineralischen Flockungsmitteln.

9. Verfahren nach einem der vorhergehenden Ansprüche, **dadurch gekennzeichnet, dass** der Methanisierungsschritt ii) gemäß einer Methode ausgeführt wird ausgewählt aus der Gruppe bestehend aus der trockenen Methode, der flüssigen Methode, der unendlich gemischten Methode.

10. Verfahren nach einem der vorhergehenden Ansprüche, **dadurch gekennzeichnet, dass** der Kompostierungsschritt einen Schritt der thermophilen Aerobiose bei einer Temperatur zwischen 55 und 85 °C umfasst, gefolgt von einem Schritt der Reifung bei einer Raumtemperatur.

11. Verfahren nach einem der vorhergehenden Ansprüche, **dadurch gekennzeichnet, dass** die Dauer des Kompostierungsschritts zwischen 5 Tagen und 8 Wochen liegt.

12. Verfahren nach einem der vorhergehenden Ansprüche, **dadurch gekennzeichnet, dass** der Kompostierungsschritt eine erzwungene Sauerstoffzufuhr und/oder zwei Schwadenumkehrungen umfasst.

## Claims

1. A method for the decontamination treatment of an organic product containing at least one active molecule selected from the group consisting of water-soluble molecules and at least one active molecule selected from the group consisting of water-insoluble molecules, comprising the following steps:
- i) provision of a mixture comprising said organic product,
- ii) treatment of the mixture by methanisation for 10 to 80 days at a temperature comprised between 30 and 60°C,
iii) recovery of a digestate composed of water, mineral matter, organic matter and at least one water-insoluble active molecule,
- iv) liquid/solid separation of the digestate,
- v) treatment by composting of the solid phase obtained by liquid/solid separation of the digestate until obtaining a substrate wherein the amount of water-insoluble active molecules is reduced by at least 70% compared to the amount initially present in said solid phase,
- vi) recovery of the substrate in the form of compost;
- **characterised in that** the organic product comprises the treated seeds and that the active molecule selected from the group consisting of water-soluble molecules and the active molecule selected from the group consisting of water-insoluble molecules are selected from the fungicidal molecules, insecticidal molecules, herbicide molecules, human drugs, veterinary drugs, hormones and mixtures thereof.

2. The method according to claim 1, **characterised in that** the active molecule selected from the group consisting of water-soluble molecules is selected from the group consisting of clothianidin, imidacloprid, mefenoxam, mercaptodimethur, thiamethoxam, thiram, triazoxide, cymoxanil, tefluthrin, silthiofam, prothioconazole and mixtures thereof; and the active molecule selected from the group consisting of water-insoluble molecules is selected from the group consisting of fipronil, fludioxonil, thebuconazole, triticonazole, and mixtures thereof.

3. The method according to one of the preceding claims, **characterised in that** the dry matter of the organic product represents from 1 to 100%, more particularly from 5 to 90%, by weight of the dry matter of the mixture of step i).

4. The method according to one of the preceding claims, **characterised in that** the organic load rate of the methanisation step is comprised between 0.2 and 10 kg of Organic Matter/m³ of digester/day.

5. The method according to one of the preceding claims, **characterised in that** the solid/liquid separation step is carried out by a technique selected from the group consisting of decantation and filtration.

6. The method according to the preceding claim, **characterised in that** the filtration is selected from the group consisting of microfiltration, nanofiltration, ultrafiltration, mechanical press filtration, mechanical belt filtration.

7. The method according to one of the preceding claims, **characterised in that** the solid/liquid separation step comprises adding at least one flocculating agent intended to improve the capture in the solid phase of the water-insoluble active molecules.

8. The method according to claim 7, **characterised in that** the flocculating agent is selected from the group consisting of organic flocculants and inorganic flocculants.

9. The method according to one of the preceding claims, **characterised in that** the methanisation step ii) is carried out according to a process selected from the group consisting of the dry process, the liquid process, the infinitely mixed process.

10. The method according to one of the preceding claims, **characterised in that** the composting step comprises a thermophilic aerobic step at a temperature comprised between 55 and 85°C followed by a maturation step at room temperature.

11. The method according to one of the preceding claims, **characterised in that** the duration of the composting step is comprised between 5 days and 8 weeks.

12. The method according to one of the preceding claims, **characterised in that** the composting step comprises a forced supply of oxygen and/or two windrow turns.
